# EUROPEAN PATENT APPLICATION

(11) **EP 4 851 944 A1**
(43) Date of publication of application: **09.12.2026**
(21) Application number: 25300077.2
(22) Date of filing: 06.06.2025
(51) Int. Cl.: G06V 10/30, G06T 5/60, G06T 5/70

(54) **DIFFUSION MODEL BASED DENOISING OF IMAGES**

(71) Applicant: Sony Interactive Entertainment Inc., Tokyo 108-0075 (JP)
(72) Inventor: MAKRIDIS, Pavlos, Tokyo, 108-0075 (JP); LECHAT, Alexis, Tokyo, 108-0075 (JP); TREDER, Matthias, Tokyo, 108-0075 (JP); TORANO, Jesus Alejandro Zarzar, Tokyo, 108-0075 (JP)
(74) Representative: Fish & Richardson P.C.

(57) **Abstract**

Methods, systems, and apparatus for denoising images generated using Monte Carlo rendering and include receiving image data of a set of images, each image in the set of images depicting a scene, for each pixel of a set of pixels of images in the first set of images, training a pixel-Gaussian Mixture Model (GMM) to provide a set of pixel-GMMs that collectively define an image GMM, each pixel-GMM including a plurality of Gaussian distributions determined from the image data for a respective pixel, training a diffusion model to denoise images, the training including generating a set of training images by sampling from the first image GMM and executing iterations of training using the set of training images, and deploying the diffusion model for denoising of images generated using Monte Carlo rendering.

## Description

### TECHNICAL FIELD

This specification relates generally to real-time rendering of digital images and more particularly to training diffusion models using training images generated using Gaussian mixture models (GMMs).

### BACKGROUND

Real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

### SUMMARY

This specification describes systems, methods, devices, and other techniques relating to real-time rendering of digital images and more particularly to training diffusion models using training images generated using Gaussian mixture models (GMMs). The (trained) diffusion models can be deployed for denoising images.

In general, innovative aspects of the subject matter described in this specification can include actions of receiving image data of a first set of images, each image in the first set of images depicting a first scene, for each pixel of a set of pixels of images in the first set of images, training a pixel-GMM to provide a set of pixel-GMMs that collectively define a first image GMM, each pixel-GMM including a plurality of Gaussian distributions determined from the image data for a respective pixel, training a diffusion model to denoise images, the training including generating a set of training images by sampling from the first image GMM, and executing iterations of training using the set of training images, and deploying the diffusion model for denoising of images generated using Monte Carlo rendering. Other implementations of this aspect include corresponding systems, apparatus, and computer programs, configured to perform the actions of the methods, encoded on computer storage devices.

These and other implementations can each optionally include one or more of the following features: generating a set of training images by sampling from the first image GMM includes, for each pixel of a training image, sampling one or more data points from a pixel-GMM of a respective pixel and using the one or more data points to provide pixel data for the respective pixel within a training image; actions further includes averaging values of two or more data points to provide the pixel data; generating a set of training images by sampling from the first image GMM includes sampling at a first samples per pixel (SPP) for a first training image and sampling at a second SPP for a second training image, the first SPP being less than the second SPP; the first training image is used as input to the diffusion model during training and the second SPP is used as a ground truth to determine a loss value; training a pixel-GMM includes transforming image data from a color space to a radial log space; training a pixel-GMM includes initializing the pixel-GMM using K-means clustering to define initial values of a set of parameters for each of the plurality of Gaussian distributions, and adjusting values of the parameters from the initial values through iterations of Expectation-Maximization (EM) until convergence; deploying the diffusion model for denoising of images generated using Monte Carlo rendering includes integrating the diffusion model in an application that is distributed to users; the values of the parameters in the set of parameters include a mean, a covariance matrix, and a weight that are specific to a respective Gaussian distribution of a respective pixel-GMM; and images in the first set of images are generated using Monte Carlo rendering at a SPP that is greater than SPPs of training images in the set of training images.

The present disclosure also provides a non-transitory computer-readable storage medium coupled to one or more processors and having instructions stored thereon which, when executed by the one or more processors, cause the one or more processors to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

Particular implementations of the subject matter described in this specification can be executed so as to realize one or more of the following advantages.

Implementations of the present disclosure eliminate the need to render multiple images at different SPPs. For example, traditional approaches to training diffusion models require precomputing or dynamically rendering images at different SPPs, resulting in high storage or compute costs. As described in detail herein, implementations of the present disclosure enable generation of training images at arbitrary SPPs using GMM sampling. The training images can be generated on-the-fly for training. Implementations of the present disclosure enable generation of compact and flexible training datasets. For example, and as described herein, once an image GMM is trained for a scene, the image GMM enables infinite synthetic generation of training images at arbitrary noise levels (SPPs). This vastly reduces dataset size and enables easy augmentation.

Implementations of the present disclosure also enable tailored training for noise specific to Monte Carlo rendering. For example, unlike prior diffusion-based denoisers that use large, generic pre-trained models, implementations of the present disclosure explicitly train for the structured, non-Gaussian nature of noise introduced in Monte Carlo rendering. This enables more compact and specialized diffusion models that are better suited to real-time use.

Implementations of the present disclosure also accelerate training and evaluation cycles. For example, by removing the online rendering bottleneck, researchers and practitioners can iterate faster during model development and hyperparameter tuning. Implementations of the present disclosure also improve scalability and real-time potential. For example, the GMM-based training pipeline of the present disclosure decouples data generation from rendering, making the training pipeline scalable across scenes. The optional integration of one-step diffusion architectures opens a path to real-time denoising applications.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGs. 1A and 1B depict diagrams representative of techniques for real-time rendering of images.
FIGs. 2A to 2E depict diagrams and images representative of noise introduced in real-time rendering of images.
FIG. 3 depicts a schematic diagram of a training system in accordance with implementations of the present disclosure.
FIG. 4 is a flow diagram of an example process in accordance with implementations of the present disclosure.
FIG. 5 shows an example of a computing device and associated accessories that can be employed to execute implementations of the present disclosure.
Like reference numbers and designations in the various drawings indicate like elements.

### DETAILED DESCRIPTION

The technology of this patent application is directed to real-time rendering of digital images. More particularly, the technology of this patent application is directed to training diffusion models using training images generated using Gaussian mixture models (GMMs). The diffusion models can be deployed for denoising of images, such as images generated using Monte Carlo rendering. In some examples, the diffusion models can be deployed for denoising images generated in real-time scenarios (e.g., video games).

To provide context for the subject matter of the present disclosure, real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. Using video games as a non-limiting example, real-time rendering enables players to see and interact with a game world that updates in real-time in response to player input (e.g., moving a character, changing a camera angle). The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

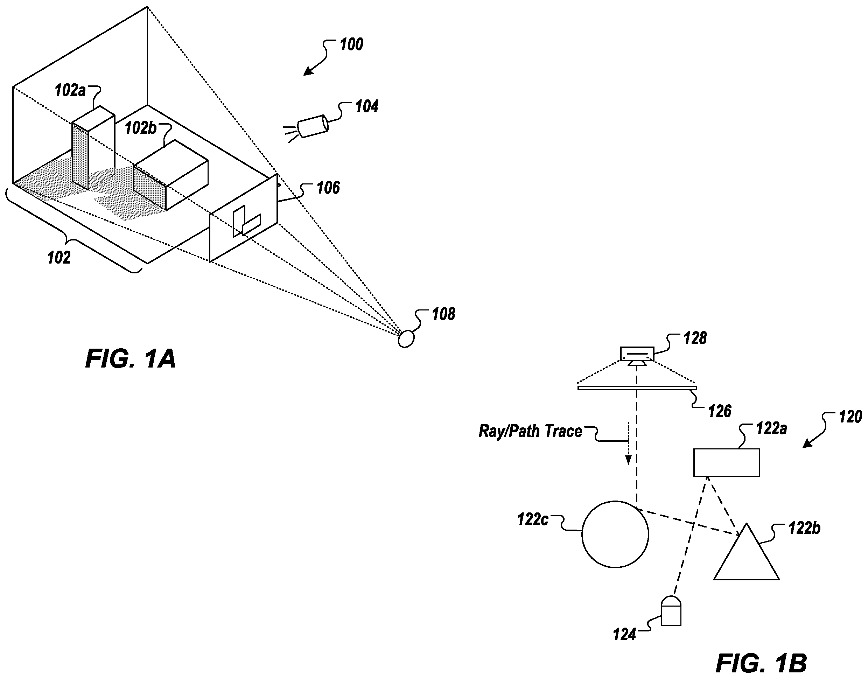

Real-time rendering of images is discussed in further detail herein with reference to FIGs. 1A and 1B, which depict schematic diagrams representative of techniques for real-time rendering of images. As used herein, the term real-time refers to execution of operations (e.g., processing data, transmitting data) without intentional delay given processing limitations of a system, the time required to accurately obtain data, store data, and the like, and any rate of change of data.

With particular reference to FIG. 1A, an environment 100 includes a multi-dimensional model 102 (a three-dimensional (3D) model) representative of a scene (e.g., a scene within a game world). For example, the multi-dimensional model 102 can be generated by an application (e.g., a video game application) and depicts objects 102a, 102b and represents interactions with and/or between the objects 102a, 102b within the scene. A light source 104 casts light on the scene that affects the appearance of the objects 102a, 102b within the scene. Although a single light source 104 is depicted, it is contemplated that multiple light sources can be provided. In the example of FIG. 1A, the light results in the objects 102a, 102b casting respective shadows.

With regard to real-time rendering, an image displayed within an image plane 106 is generated from the perspective of a camera 108. The image depicts a two-dimensional (2D) representation of the 3D scene. The image can be, for example, a frame of a series of frames to depict animation within the scene. That is, the image is regenerated at a frame-rate (e.g., ≥ 60 FPS) to depict changes in the scene over time (e.g., as the objects 102a, 102b interact with each other, as users interact with the objects, as the position of the camera 108 changes). The image is provided as a set of pixels (e.g., a 4K image (3840 x 2160 pixels), a 1080p image (1920 x 1080 pixels), a 1440p image (2560 x 1440 pixels). Each pixel is associated with a set of data that describes characteristics of subject matter that is depicted in the image (e.g., the objects 102a, 102b). Example data in the set of data can include color data (e.g., RGBA data), depth data (e.g., Z-buffer), stencil data, normal vector (surface direction), and the like.

With reference to FIG. 1B, techniques referred to as ray tracing and path tracing will be described. In general, ray tracing can be described as the operation of tracing a ray and finding its first intersection point (referred to as hit) with the geometry within the scene. Path tracing extends additional rays from hits (e.g., from the first hit determined using ray tracing) to effectively bounce around the geometry to define a light path. For clarity, the term path tracing is used for the following discussion.

Path tracing can be used for real-time rendering of high quality (e.g., photorealistic) images by simulating the manner in which light interacts with objects in a scene. FIG. 1B depicts an environment 120 representative of a scene having objects 122a, 122b, 122c. A light source 124 emits light on the scene and a camera 128 generates images of the scene. An image can be represented in an image plane 126.

Path tracing performs pixel shading to simulate global illumination to account for more complex interactions and to improve image realism. Path tracing, which includes multiple bounces within the scene along paths, simulates complex light paths including indirect lighting, color bleeding, caustics, and the like. For path tracing, each pixel requires numerous rays (tens, hundreds, thousands) to be considered in order to provide a noise-free, accurate image. This is computationally expensive and too slow for real-time rendering under realistic hardware constraints.

For each pixel, the rendering equation is approximated to determine the total outgoing light from the surface represented in the respective pixel as a function of emitted light, incoming light, material properties (e.g., mirror, glossy, matte), and geometric properties (e.g., Lambert Cosine Law). Due to the complexity of the rendering equation, which is a recursive equation, particularly when accounting for indirect lighting and multiple light-surface interactions, a direct analytical solution is not feasible.

To address the computational expense of techniques such as path tracing and the infeasibility of calculating the rendering equation, Monte Carlo rendering has become a widely adopted technique. Monte Carlo rendering produces photorealistic images by simulating the physical behavior of light. At a high-level, Monte Carlo rendering uses probability and randomness to approximate lighting values that would be too complex and/or too slow to compute under realistic hardware constraints.

Specifically, Monte Carlo rendering utilizes stochastic sampling to approximate solutions to the rendering equation, discussed above, which models the transport of light in a virtual scene. Monte Carlo rendering employs random sampling to estimate the integral components of light transport, where light contribution is computed based on probabilistic sampling, using functions such as the bidirectional reflectance distribution function (BRDF) to evaluate the surface response. The results from the sampled paths are averaged to estimate the color or radiance of each pixel in the image. As more samples are taken, the estimate converges toward an accurate solution, enabling realistic simulation of lighting phenomena such as soft shadows, indirect illumination, and caustics.

In achieving convergence, Monte Carlo rendering limits the number of paths (rays cast) per pixel, where each path is considered a sample. Accordingly, a metric, referred to as samples per pixel (SPP), is used to limit a number of paths (rays cast) processed for each pixel. The higher the SPP, the more computationally intensive (and slow) the processing and the better the accuracy of the rendered image. The lower the SPP, the more computationally efficient (and fast) the processing, but accuracy is lost. Further, due to its stochastic nature, Monte Carlo rendering introduces noise, which increases with lower SPPs. The more noise, the lower the visual fidelity (accuracy) of the rendered image.

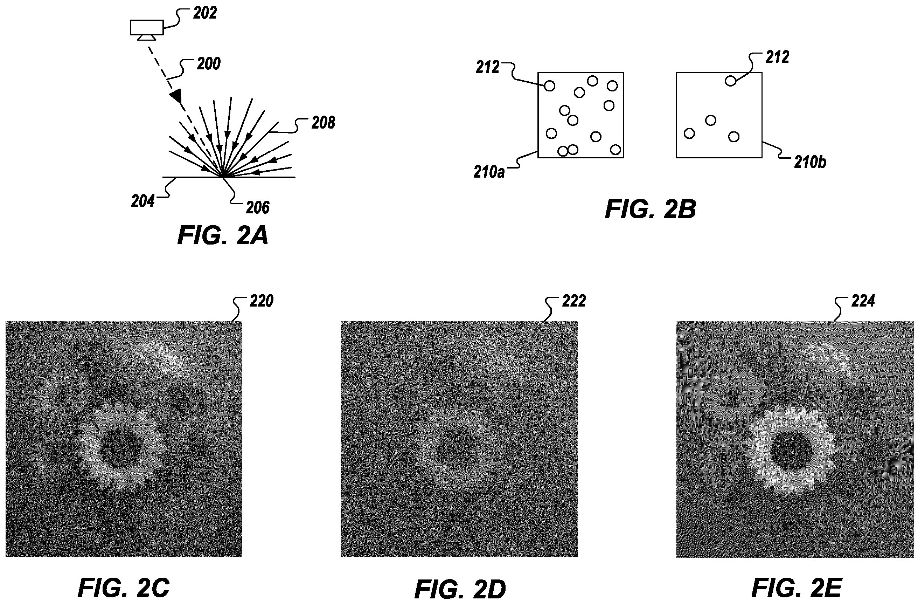

FIGs. 2A to 2E depict diagrams and images representative of noise introduced in real-time rendering of images. In the example of FIG. 2A, for a pixel, a path 200 of a ray is cast from a camera 202 and contact a surface 204 at a point 206. Here, the surface 202 represents a surface of an object within a scene and the point 206 is the point, from which the ray is reflected to the camera 202 along the path 200. As discussed above, the rendering equation is solved for the ray to determine the outgoing light of the rays toward the camera 202. As discussed above this, among other properties, is a function of incoming light represented as incoming rays 208 (e.g., from direct light source(s), from indirect light source(s)). The ray can be one of tens, hundreds, thousands, or more rays for the pixel that could be reflected from the surface 204 at various angles. Ideally, the outgoing light for the pixel would be calculated over all of the rays with a given outgoing light for each ray. However, this is computationally infeasible, particularly under realistic hardware constraints.

To address this, and as discussed above, Monte Carlo rendering randomly samples rays (paths) to provide a sample of rays that the rendering equation is solved over. That is, Monte Carlo rendering is performed using a selected SPP to limit the number of rays (paths) considered. To further improve computational efficiency, the number of incoming rays 208 considered in the calculations can be limited. For example, techniques, such as importance sampling and multiple importance sampling can be used to limit the number of incoming rays 208 used for the calculations.

FIG. 2B depicts a pixel 210a and a pixel 210b, each pixel 210a, 210b having multiple samples 212, each sample indicating a respective ray that contributes an outgoing light value to the total outgoing light value determined for the respective pixel. In the example of FIG. 2B, the pixel 210a has a first SPP (e.g., 12 SPP) and the pixel 210b has a second SPP (e.g., 4 SPP) that is lower than the first SPP. As such, the first SPP results in a noisy image that has a higher fidelity than a noisy image resulting from the second SPP. For example, an image 220 of FIG. 2C can represent a noisy image that is generated using the first SPP and an image 222 of FIG. 2D can represent a noisy image that is generated using the second SPP. As represented in FIGs. 2C and 2D, lower SPPs result in a higher amount of noise. As such, while lower SPPs are more computationally efficient, they result in images having higher amounts of noise and thus, less accurate (lower fidelity) images.

For real-time rendering applications, denoising is used to maintain visual fidelity (accuracy) and computational performance. At a high-level, denoising includes applying a denoiser to noisy images to smooth out the noise and produce a cleaner, more visually accurate image (i.e., an output image that is less noisy than an input image). Denoising can include spatial filtering based on neighboring pixels and temporal filtering based on pixels from previous frames. In some cases, denoising can include using machine learning (ML) models that are trained to reconstruct higher quality images from lower quality, noisy images. With reference to FIG. 2D, an image 224 can be provided as a denoised image of one of the images 220, 222 of FIGs. 2C and 2D, respectively.

As discussed above, Monte Carlo rendering produces high-quality images by stochastically simulating light transport. However, rendering at low SPP results in high-variance, structured noise that is difficult to denoise due to its non-Gaussian and scene-dependent nature. Diffusion models, originally developed for denoising Gaussian-corrupted images, are an appealing fit for denoising Monte Carlo renderings due to their ability to progressively refine noisy inputs into clean outputs. Importantly, diffusion models also support conditional generation, allowing the diffusion models to be guided by auxiliary data, such as G-buffers or learned scene embeddings. However, a key limitation in applying diffusion models to denoising is the need to generate training pairs across various noise levels. Creating such training data requires either in-the-loop Monte Carlo rendering at multiple SPP levels, which is computationally expensive, or pre-rendering and storing large multi-SPP datasets, which is storage-intensive.

In view of the foregoing, implementations of the present disclosure provide a training system for training denoising diffusion models using GMM-based image representations. In accordance with implementations of the present disclosure, an image GMM is generated using multiple GMMs to model the entire per-pixel distribution of samples of Monte Carlo renderings (i.e., images generated using Monte Carlo rendering). This image representation (image GMM) enables rendering images at arbitrary SPP levels by sampling from learned distributions. As such, the image GMM is used to generated training images for training diffusion models for denoising. As described in further detail herein, the training system of the present disclosure eliminates the need for direct rendering of the same scene at multiple SPP levels by leveraging the image GMM to synthetically generate images (training images) at arbitrary noise levels on demand.

In further detail, a GMM can be described as a probabilistic model that assumes all data points are generated from a combination of multiple Gaussian distributions having unknown parameters. At a high-level, a GMM is generated through clustering (referred to as soft clustering), in which each data point is assigned to two or more clusters with respective probabilities, each cluster representing a Gaussian distribution. In the context of the present disclosure, each data point is provided as a pixel vector (e.g., RGB data of a pixel). Each Gaussian distribution is defined by a mean (*µ*), a covariance matrix (Σ), and a mixing coefficient (*π*) (also referred to as weight), respectively. The mean indicates the center of the respective Gaussian distribution, the covariance indicates the spread and orientation of the respective Gaussian distribution, and the mixing coefficient indicates a proportion of the respective Gaussian distribution in the in the multiple Gaussian distributions.

In the context of the present disclosure, a pixel-GMM is generated for each pixel of a set of images. For purposes of non-limiting illustration, each image can be 1280 × 720, to provide a total of 921,600 pixels. In this example, 921,600 pixel-GMMs would be generated, a pixel-GMM for each pixel. In some implementations, an image GMM is defined as the set of pixel-GMMs. As such, the image GMM models the entire per-pixel distributions of the images in the set of images.

In the context of the present disclosure, a set of pixel-GMMs is trained using images generated for scenes using Monte Carlo rendering. More particularly, and as described in further detail herein, Monte Carlo rendering is executed to generate a set of images for a scene. In some examples, each image is rendered at a relatively high SPP (e.g., 30 SPP, 40 SPP, 50 SPP, 100 SPP, 500 SPP, 1000 SPP, 2000 SPP, 4000 SPP). The scene can be a scene of a 3D model as depicted from a camera position within a world space of the 3D model, each image being a 2D representation of the scene. Accordingly, each image in the set of images depicts the same scene. However, the pixel-level image data (e.g., RGB color space) varies between images. That is, a pixel in one image has different image data than the same pixel in another image even though both images are of the same scene. This is a result of, for example, the stochastic nature of Monte Carlo rendering.

As described in further detail herein, each pixel-GMM is trained for a respective pixel using the image data generated for the pixel across all images. That is, the pixel-level data for each pixel across all images in the set of images is used to generate the Gaussian distributions of a pixel-GMM. For purposes of non-limiting illustration, a set of 10 images can be considered, each image depicting the same scene as all other images and being generated using 2000 SPP. Consequently, each pixel includes 20,000 samples of image data. For each pixel, a pixel-GMM is generated using the 20,000 samples.

In some implementations, a pixel-GMM is initialized using K-Means clustering on a first batch of samples. In this manner, an initial pixel-GMM is provided as an initial estimate of the cluster centroids serving as the initial values for each *µₖ*, where *k* is the number of clusters. Cluster assignments are used to initialize the covariances Σ*ₖ*, and relative counts are used to initialize the weights *wₖ.* In some examples, K-Means++ is used to mitigate all components being assigned to the dominant mode. In some examples, the standard Euclidean distance metric is extended to a combination of Euclidean distance and cosine distance. This mixed metric takes into account both position and angular relationships between data points. To this end, *λ* ∈ [0, 1] is a parameter that blends between Euclidean distance (*λ* = 0) and cosine distance (*λ* = 1).

In some implementations, transformation is performed to map the image data (3D radiance data) into a radial log space for each pixel using the projection function *ϕ*. In some examples, the radial log values improve data fitting performance. In further detail, for a given input RGB vector $x ∈ {ℝ}_{+}^{3}$ (data sample of image data), the radial log transformation is defined as: $z = ϕ \left(x\right) = \frac{x}{\left‖x\right‖} log \left(\left‖x\right‖+1\right)$

Unlike a standard component-wise log transform, the entire color vector is scaled by a single scalar compression factor, which preserves angular distances in RGB space. This mitigates distortions that arise when taking the logarithm of each channel independently. For instance, linear modes become curves under the component-wise log, but remain linear under the radial log. The transformation is invertible with a closed-form solution given by: ${ϕ}^{- 1} \left(z\right) = \left({e}^{\left‖z\right‖}-1\right) \frac{z}{\left‖z\right‖} , z \neq 0$

In this manner, it is assured that samples taken from the model can be unambiguously lifted back into original RGB space.

To generate each pixel-GMM, training is employed, because the parameters (means, covariances, mixing coefficients) of the Gaussian distributions of a pixel-GMM are latent variables that cannot be directly observed. Consequently, the parameters are estimated during training from data samples (e.g., the 20,000 data samples in the example above) using an Expectation-Maximization (EM) algorithm that operates in an Expectation (E) step and a Maximization (M) step. The E step and the M step are repeated until convergence, which can occur when changes in the log-likelihood or parameter estimates are less than a predefined threshold.

In further detail, training is performed using batches of samples (image data) until all samples have been processed. Each batch is transformed using *ϕ* and an EM update is performed in order to update the GMM parameters (*µ*, *Σ*, *w*) using summary statistics based on the derivatives of the log likelihood function.

Instead of a naive EM algorithm that requires access to the entire dataset, implementations of the present disclosure use a memory-efficient online version of GMM that is built incrementally in a single pass. Here, batches of data samples are used once for updating and are immediately discarded from memory. In some examples, the log likelihood is used as a loss function for a given batch. In some examples, covariance matrices are regularized by adding a (small) diagonal constant, which can be described as being akin to a Maximum A Posteriori (MAP) solution with a diagonal prior for the covariance and flat priors for the means and weights.

A pixel-GMM, as with GMMs generally, does not guarantee consistency. That is, EM-converged parameters do not provably converge to the true data mean due to bias. Here, bias can be small and not evident for low SPP images, but emerges as noisy pixels in high SPP images. However, because the original Monte Carlo estimator is unbiased, implementations of the present disclosure apply a global shift (Δ) to the pixel-GMM, such that the mean of the pixel-GMM matches the target value (the Monte Carlo mean).

In some implementations, compression is used and relies on quantization and codebook compression. In further detail, a GMM of *k* Gaussian distributions needs to store 10 × *k* parameters per pixel (3 × *k* for the means, 6 × *k* for the (symmetric) covariance matrices, k for the weights (mixing coefficients)). For an implementation using 64-bit floating point numbers (which provides numerical stability in training and sampling), this leads to 640 × *k* bits per pixel. This can result in GMMs occupying large amounts of storage space for high resolution images.

To mitigate this, implementations of the present disclosure can downcast all parameters of the GMM to 16-bit floating point numbers, which does not incur any loss of visual and density modeling fidelity. This reduces the storage space by a factor of four (4) and can serve as an intermediate solution when no loss of quality is required. Further compression can be achieved by linearly quantizing the weights and means to 8-bit integers and decomposing the covariance matrices into scale and rotation (Euler angle) vectors.

In some implementations, codebook compression is performed across the entire image using K-means clustering. Compression is separately performed for the means, scales and rotations. In each case, a codebook of size 256 is used, such that indexes can be encoded as 8-bit integers. Overall, this yields a compression factor of approximately 20 (32 × *k* bits per pixel and a fixed cost of 30 Kb for the codebooks). To provide a non-limiting, concrete example, an image of size 1280 × 720 using *k* = 4 Gaussian components can be considered, where compression reduces the size from 2.19 GB to 112.52 MB. As noted above, for numerically stable inference, 64-bit floating point numbers are to be used. As such, the pixel-GMMs can be uncompressed to original size before use.

In some implementations, compression enables one pixel-GMM to be used for multiple pixels. For example, if multiple pixel-GMMs have sufficiently similar parameter values (e.g., equal and/or within a threshold difference), a single pixel-GMM is stored and is indexed for other pixels. In this manner, redundant or pseudo-redundant pixel-GMMs are not stored, which conserves memory. For example, a first pixel-GMM is generated for a first pixel and a second pixel-GMM is generated for a second pixel. It can be determined that the first pixel-GMM and the second pixel-GMM are sufficiently similar (e.g., parameter values are equal and/or within a threshold difference). Consequently, the first pixel-GMM can be stored and the first pixel and the second pixel are both indexed to the first pixel-GMM, and the second pixel-GMM can be deleted. When generating training images, as described in further detail herein, samples for the first pixel are selected using the first pixel-GMM and samples for the second pixel are selected using the first pixel-GMM.

In some implementations, compression enables a Gaussian distribution to be used in multiple pixel-GMMs. For example, if Gaussian distributions of multiple pixel-GMMs are sufficiently similar parameter values (e.g., equal and/or within a threshold difference), the Gaussian distribution is stored and is indexed for each of the multiple pixel-GMMs. In this manner, redundant or pseudo-redundant Gaussian distributions are not stored, which conserves memory. For example, a first pixel-GMM is generated for a first pixel and has a first Gaussian distribution (among multiple Gaussian distributions) and a second pixel-GMM is generated for a second pixel and has a second Gaussian distribution (among multiple Gaussian distributions). It can be determined that the first Gaussian distribution and the second Gaussian distribution are sufficiently similar (e.g., parameter values are equal and/or within a threshold difference). Consequently, the first Gaussian distribution can be stored and the first pixel-GMM and the second pixel-GMM are both indexed to the first Gaussian distribution, and the second Gaussian distribution can be deleted. When generating training images, as described in further detail herein, samples for the first pixel are selected using the first pixel-GMM populated with the first Gaussian distribution (among multiple Gaussian distributions) and samples for the second pixel are selected using the first pixel-GMM populated with the first Gaussian distribution (among multiple Gaussian distributions).

After training, an image GMM is defined as the set of pixel-GMMs generated through training. As such, and as noted above, the image GMM models the entire per-pixel distributions of the images in the set of images. As described in further detail herein, the image GMM is used during sampling to generate training images at arbitrary SPPs to be used as training data to train a diffusion model.

In further detail, to generate a training image, each pixel-GMM is sampled at various SPP counts *N.* By way of non-limiting example, for *N =* 1 (i.e., 1 SPP), the sampling procedure is as follows. For each pixel, a sample *z* ~ *GMM_{Θ}* is drawn from a respective pixel-GMM. This can include drawing an index *i* from the categorical distribution defined by the weight (*w*₁, ..., *wₖ*) (to decide which Gaussian distribution within the pixel-GMM to sample from) and then sampling from the corresponding Gaussian distribution 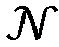 (*µₖ*, *Σₖ*)*.* Because the samples are defined in radial log space, as discussed above, the samples are mapped into RGB space using *ϕ*⁻¹, described above. For *N >* 1, this sampling process can be repeated *N* times and the samples averaged.

Both computationally and memory-wise, this becomes inefficient for larger SPP values. In view of this, implementations of the present disclosure provide for resource-efficient sampling that can be used for higher SPPs (e.g., *N* > 32), which is referred to as cascaded sample counts. Here, Gaussian sample counts (*n*₁*,* ..., *n_{K}*) are computed ${\sum }_{k}^{K} {n}_{k} = N$, which indicate how often each Gaussian distribution is selected. The Gaussian sample counts can be directly obtained by sampling from a multinomial distribution *Mult*(*N*; *w*₁, ... , *wₖ*)*.* The result is sample counts for each Gaussian distribution.

In some implementations, sampling only once from *N*(*µₖ, Σₖ*/*nₖ*), instead of sampling *nₖ* times from *N*(*µₖ*, Σ*ₖ*), is more exact, as if the pixel-GMM is defined in RGB space. For the Gaussian distributions defined in log space, the central limit theorem provides an approximation whose fidelity increases with *nₖ*. To this end, the Unscented Transform can be used to estimate the mean *µ̂ₖ* and covariance matrix Σ̂*ₖ* of every GMM component in RGB space and then sample once from each *N*(*µₖ,* Σ*ₖ*/*nₖ*)*.* Using the *nₖ* values to take a weighted average of the *k* Gaussian distributions samples gives the training image. This sampling approach reduces sampling complexity from *O*(*N*) to *O*(*k*), which enables fast generation of training images.

Further detail of generating GMMs and training images from GMMs is described in A compact stochastic representation for Monte Carlo Path Traced images, MS Treder, P Makridis, A Lechat, J Zarzar, M Villanueva-Barreiro, RR Currius, scheduled for publication in conjunction with SIGGRAPH Asia 2025, which is incorporated herein by reference in the entirety for all purposes.

In accordance with implementations of the present disclosure, a diffusion model is trained using training images generated using the image GMM. At a high-level, a diffusion model can be described as generative model that generates data, such as images, by learning, through training, how to reverse a gradual noising process. More particularly, a diffusion model learns to generate data by gradually adding noise to data (images in the context of the present disclosure) and learning how to reverse that process to recover the original data. In a forward process (diffusion), the diffusion model processes an image and gradually adds small amounts of random Gaussian noise over several steps until the image becomes pure noise. In some examples, the diffusion process is predefined and does not require learning. In a reverse process (denoising), the diffusion model reverses the noising process step-by-step, where, at each step, the diffusion model predicts and removes the noise that was added in the forward process. In some examples, the diffusion model can start from pure noise and generate a clean image through denoising.

With regard to training the diffusion model, traditional approaches to training can be implemented. In general, training can include executing multiple iterations over the training data multiple and updating the parameters of the diffusion model based on performance of the diffusion model on the training data, as evaluated using a loss function. An example loss function can include mean squared error (MSE) loss determined between the predicted noise from the diffusion model and the noise represented in a respective ground truth. In some examples, iterations are executed until a loss value, as determined by the loss function, achieves some predetermined value (e.g., is less than a threshold value). In some examples, a pre-defined number of iterations are executed.

In some implementations, for an iteration of training, training images at multiple SPPs are generated to train the diffusion model to generate an image at a higher-level SPP from an image at a lower-level SPP. For example, for an iteration, a first image is generated at 1 SPP and a second image is generated at 2 SPP, and the diffusion model is trained using the first image as input and the second image as the ground truth. As another example, for another iteration, a first image is generated at 2 SPP and a second image is generated at 4 SPP, and the diffusion model is trained using the first image as input and the second image as the ground truth. In this manner, and for these example iterations, the diffusion model is trained to denoise from 1 SPP to 2 SPP and from 2 SPP to 4 SPP. This can continue through the training process to train the diffusion model to denoise from, for example and without limitation, 4 SPP to 8 SPP, from 8 SPP to 16 SPP, from 16 SPP to 32 SPP, and so on.

In some implementations, the training images are generated on-demand during training of the diffusion model. That is, the training images do not need to be first generated prior to initiating training of the diffusion model. Instead, for each iteration of training, one or more training images are generated for various SPPs. The training image(s) can be used for the iteration of training of the diffusion model and can then be deleted. As such, the training image(s) need not consume memory.

In some implementations, the diffusion model can be conditioned during training. In general, conditioning can be described as providing condition input to guide the image generation process toward a desired output. This transforms the diffusion model to generate images with more specificity. In this manner, the diffusion model is trained to denoise in a way that matches the condition. In the context of the present disclosure, G-buffer data (e.g., normals, depths, albedo) and/or learned scene embeddings can be used as conditioning inputs to the diffusion model to improve fidelity and generalization.

Overall, through training, the diffusion model is trained to understand what Monte Carlo noise looks like for the particular scene represented by the set of images. In some cases, an application can have many scenes (e.g., a video game having various scenes). In view of this, an image GMM can be generated for each scene to provide a set of image GMMs. The diffusion model is trained on the set of image GMMs. In this manner, the diffusion model is generalized to the scenes represented by the set of image GMMs. That is, the diffusion model is trained to understand what Monte Carlo noise looks like for the multiple scenes represented by sets of images and their respective image GMMs.

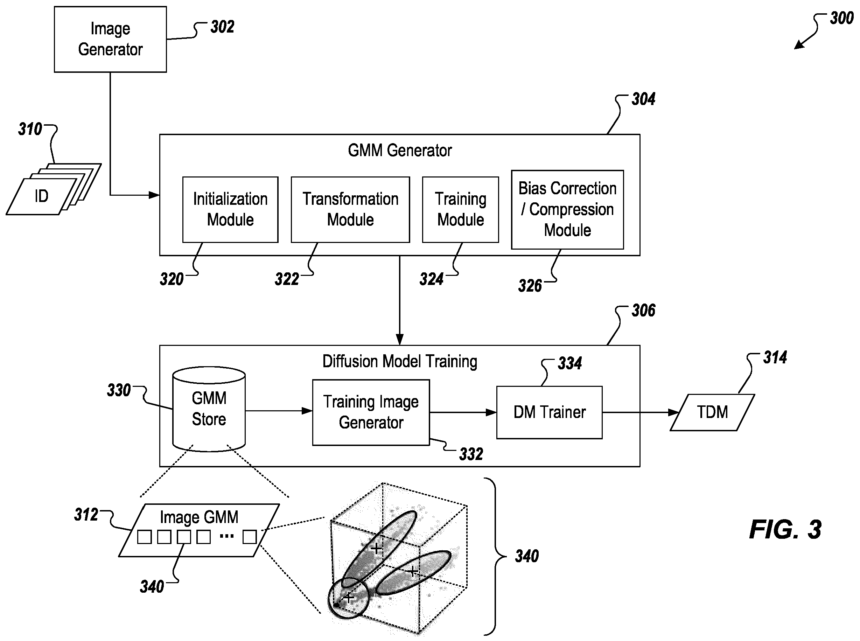

FIG. 3 depicts a schematic diagram of a training system 300 in accordance with implementations of the present disclosure. In the example of FIG. 3, the training system 300 includes an image generator 302, a GMM generator 304, and a diffusion model training system 306. As described in further detail herein, the image generator 302 generates a set of images 310, which is processed through the GMM generator 304 to generate an image GMM 312. As also described in further detail herein, the image GMM 312 is processed by the diffusion model training system 306 to generate a diffusion model 314 (a trained diffusion model (TDM)).

In the example of FIG. 3, the GMM generator 304 includes an initialization module 320, a transformation module 322, a training module 324, and a bias correction and compression module 326. In the example of FIG. 3, the diffusion model training system 306 includes a GMM store 330, a training image generator 332, and a diffusion model trainer 334.

In accordance with implementations of the present disclosure, the image generator 310 generates the set of images 310. Each image is represented as image data (e.g., RGB data). As described herein, each image depicts a scene (e.g., a scene within a 3D model, such as that represented in FIG. 1) all images depicting the same scene. In some examples, each image is generated using Monte Carlo rendering at a predefined SPP (e.g., > 30 SPP). For example, an application (e.g., a video game) can be executed by the image generator (e.g., a gaming console) to depict the scene and to generate the set of images 310. In some examples, the image data of an image includes pixel vectors, each pixel vector representative of properties (e.g., RGB data) of a respective pixel in a set of pixels (e.g., 921,600 pixels for a 1280 × 720 (720p) image).

In some implementations, the set of images 310 is processed by the GMM generator 304 to generate the image GMM 312. For example, the transformation module 322 transforms the image data to radial log space, as described herein, the training module 324 performs training to train each pixel-GMM, as described herein, and the bias correction and compression module 326 performs bias correction and compression, as described herein. As described herein, the GMM generator 304 generates a pixel-GMM 340 for each pixel. In this manner, each pixel-GMM 340 provides a set of Gaussian distributions that are specific to the respective pixel. As depicted in FIG. 3, the image GMM 312 includes a set of the pixel-GMMs 340, each pixel-GMM including three (3) Gaussian distributions (e.g., *k* = 3; *µ*₁, Σ₁*, w*₁*; µ*₂, Σ₂, *w*₂; *µ*₃, Σ₃, *w*₃).

In some implementations, the image GMM 312 is stored in the GMM store 330 and is used to generate training images for training a diffusion model, as described herein. In some examples, the training image generator 332 generates training images by sampling from the image GMM 312. For example, for each pixel of the training image being generated, samples are taken from the respective pixel-GMM 340 at a predefined SPP (e.g., 1 SPP, 5 SPP, 10 SPP) and the samples are used (e.g., averaged) to provide image data (pixel vector) for the respective pixel within the training image, as described herein. In some examples, sampling from each of the pixel-GMMs is executed in parallel. In this manner, image data for the respective pixels is determined in parallel. The training image is provided to the diffusion model trainer 334, which trains the diffusion model using the training image, as described herein, to provide the (trained) diffusion model 312.

In accordance with implementations of the present disclosure, the diffusion model 312 is deployed for denoising images. In some examples, the diffusion model 312 is integrated into an application (e.g., a video game) that is distributed to users. For example, the application can be installed to a computing device (e.g., a gaming console) to enable users to interact with the application (e.g., play the video game). During interactions, Monte Carlo rendering is performed to generate images in real-time (e.g., immediately responsive to interactions within the video game), each image being generated at a predefined SPP (e.g., < 10 SPP) and having a first level of noise. Each image is processed through the diffusion model 312 to provide a denoised version of the image, referred to as a denoised image. In some examples, the denoised image has a second level of noise that is (significantly) less than the first level of noise. The denoised image is displayed (e.g., as a frame) to the user of the application.

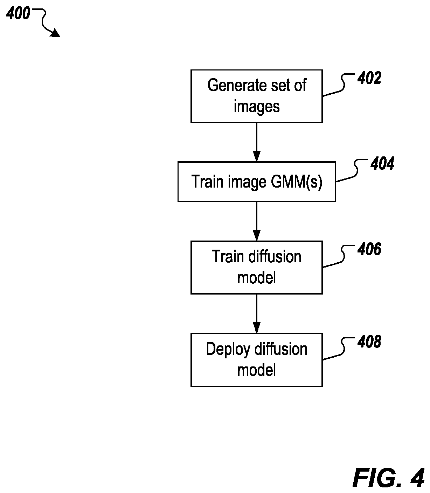

FIG. 4 is a flow diagram of an example process 400 in accordance with implementations of the present disclosure. In some examples, at least a portion of the example process 400 can be executed to generate an image GMM and use the image GMM to generate training images to train a diffusion model. After training, the diffusion model can be deployed for denoising images, such as images that are generated in real-time using Monte Carlo rendering.

A set of images is generated (402). For example, and as described in detail herein with reference to FIG. 3, the image generator 310 generates the set of images 310, where each image depicts a scene (all images depicting the same scene), and each image is generated using Monte Carlo rendering at a predefined SPP (e.g., > 30 SPP). An image GMM is trained (404). For example, and as described in detail herein, the GMM generator 304 to generates pixel-GMMs 340 that collectively define the image GMM 312. More particularly, for each pixel, a pixel-GMM is initialized (using K-Means clustering) to determine initial parameter values (*µₖ, Σₖ*, *wₖ*) for the pixel-GMM, batches of image data are processed to train the parameter values from the initial parameter values, where, for each batch image data is transformed to radial log space, and an EM update is performed to update the parameter values (*µₖ,* Σ*ₖ*, *wₖ*) of the pixel-GMM using summary statistics based on the derivatives of the log likelihood function.

A diffusion model is trained (406). For example, and as described in detail herein, iterations of training are performed using training images that are generated from the image GMM. As also described herein, the training images are generated on-demand using the image GMM during training of the diffusion model. For example, for each iteration of training, one or more training images are generated from the image GMM, and the one or more training images are used for the iteration of training. In some examples, the one or more training images are deleted from memory after the iteration.

The diffusion model is deployed (408). For example, and as described in detail herein, the diffusion model is integrated into an application (e.g., an application build, such as a video game) that is distributed to users, and the application can be executed by a computing device (e.g., a gaming console) to enable users to interact with the application (e.g., play the video game). During interactions, Monte Carlo rendering is performed to generate images in real-time (e.g., immediately responsive to interactions within the video game), each image being generated at a predefined SPP (e.g., < 10 SPP) and having a first level of noise. Each image is processed through the diffusion model to provide a denoised version of the image, referred to as a denoised image. In some examples, the denoised image has a second level of noise that is (significantly) less than the first level of noise. The denoised image is displayed (e.g., as a frame) to the user of the application.

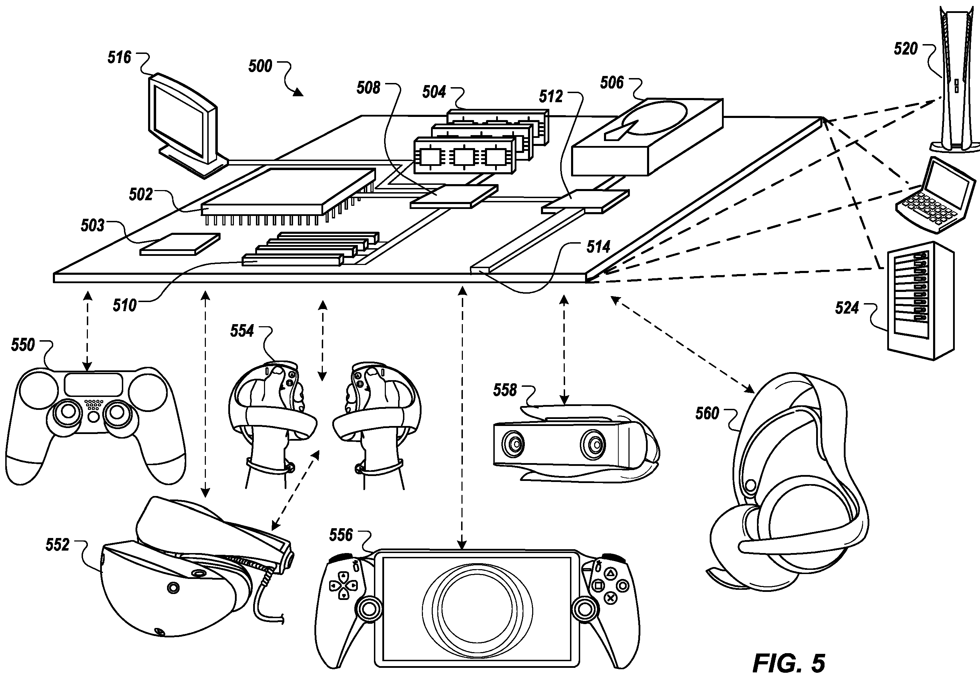

FIG. 5 shows an example of a computing device 500 and associated accessories that can be employed to execute implementations of the present disclosure. The computing device 500 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 500 can form at least a portion of a gaming system that can include one or more remote computing devices such as ones implementing a cloud-based portal or gaming platform.

In various implementations, the computing device 500 includes some combination of one or more processors or central processing units (CPUs) 502, one or more graphic processing units (GPUs) 503, memory 504, one or more storage devices 506, a high-speed interface 508, and/or a low-speed interface 512. In some implementations, the high-speed interface 508 connects to the memory 504 and multiple high-speed expansion ports 510. In some implementations, the low-speed interface 512 connects to a low-speed expansion port 514 and the storage device 504. In some implementations, the high-speed interface 508 connects to the storage device 504. Each of the processor 502, the GPU 503, the memory 504, the storage device 506, the high-speed interface 508, the high-speed expansion ports 510, and the low-speed interface 512, are interconnected using various buses, and may be mounted on a common motherboard or in other manners as appropriate. The processor 502 can process instructions for execution within the computing device 500, including instructions stored in the memory 504 and/or on the storage device 506 to display graphical information for a graphical user interface (GUI) on an external input/output device, such as a display 516 coupled to the high-speed interface 508. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 504 stores information within the computing device 500. In some implementations, the memory 504 is a volatile memory unit or units. In some implementations, the memory 504 is a non-volatile memory unit or units. The memory 504 may also be another form of a computer-readable medium, such as a magnetic or optical disk. In some implementations, the memory 504 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 506 is capable of providing mass storage for the computing device 500. In some implementations, the storage device 506 may be or include a computer-readable medium, such as a hard disk device, an optical disk device, a flash memory, or other similar solid-state memory device, or an array of devices, including devices in a storage area network or other configurations. In some implementations, the storage device 506 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 506 can be configured to support expandable storage via compatible non-volatile memory express (NVMe) SSDs. Instructions can be stored in an information carrier, and when executed by one or more processing devices, such as processor 502, perform one or more methods, such as those described above. The instructions can also be stored by one or more storage devices, such as non-transitory computer-readable or machine-readable mediums, such as the memory 504, the storage device 506, or memory on the processor 502. The instructions can constitute software for providing interactive game play on a user interface such as a graphical user interface (GUI) presented on the display 516.

The high-speed interface 508 manages bandwidth-intensive operations for the computing device 500, while the low-speed interface 512 manages lower bandwidth-intensive operations. Such allocation of functions is an example only. In some implementations, the high-speed interface 508 is coupled to the memory 504, the display 516 (e.g., through a graphics processor or accelerator), and to the high-speed expansion ports 510, which may accept various expansion cards. In the implementation, the low-speed interface 512 is coupled to the storage device 506 and the low-speed expansion port 514. The low-speed expansion port 514, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 550 such as a DualSense^{®}, DualShock^{®}, or Access^{™} controllers for PlayStation^{®} devices, a virtual reality (VR) or augmented reality (AR) headset 552 such as the PS VR2 headset, accessory controllers 554 such as PS VR2 Sense^{™} a handheld gaming device 556 such as PlayStation Portal^{®}, a camera 558, and/or an earphone/headphone set 560 such as the PULSE Elite^{™} headset or the Pulse Explore^{™} earbuds. In some implementations, the computing device 500 includes one or more acoustic transducers, and/or is connected to one or more external acoustic transducers such as one or more speakers associated with the display 516.

The computing device 500 may be implemented in a number of different forms, as shown in the FIG. 5. For example, the computing device 500 may be implemented as a gaming console 520, or as one or more servers 524 or as a rack within a server. In some implementations, the computing device 500 may be implemented as a personal computer such as a laptop computer 522. In some implementations, the computing device 500 can be implemented as a mobile device such as the connected handheld gaming device 556. In some implementations, a computing device can include one or more of the computing device 500, and an entire system may be made up of multiple computing devices communicating with each other. For example, a gaming system can include one or more of a gaming console 520, one or more accessories, and a remote platform such as a cloud-based platform implemented on one or more servers 524.

The processor 502 can be implemented as a chipset of chips that include separate and multiple analog and digital processors. For example, the processor 502 can be a multi-core processor that supports high-speed processing and enables complex computational tasks, real-time physics simulations, and advanced artificial intelligence (AI) capabilities. In one example, the processor 502 includes at least 8 cores, at least 16 threads, and operates at variable frequencies around 3.5 GHz or more. In some implementations, the processor 502 may be a Complex Instruction Set Computers (CISC) processor, a Reduced Instruction Set Computer (RISC) processor, or a Minimal Instruction Set Computer (MISC) processor.

In some implementations, the GPU 503 includes a custom GPU that supports an advanced architecture such as the RDNA 2 architecture developed by AMD. In one example, the GPU 503 includes at least 36 compute units running at speeds of 2 GHz or more, and delivers performance of at least 10 teraflops. The GPU 503 can be configured to support high quality graphics rendering. For example, the GPU 503 can be configured to support hardware-accelerated ray tracing for enhanced realism in lighting and reflections, thereby providing a highly immersive gaming experience.

The computing device can be configured to interact with one or more connected input/output or accessory device in providing the gaming experience. In some implementations, the computing device communicates with a handheld controller 550-e.g., a DualSense^{®}, DualShock^{®}, or Access^{™} controller for PlayStation^{®} devices-to provide the gaming experience. In some implementations, the controller 550 features a high-fidelity haptic feedback system with one or more actuators that simulate a wide range of tactile sensations. In some implementations the controller 550 includes one or more adaptive triggers that adjust resistance based on in-game actions to provide for a realistic feel. The ergonomic design of the controller 550 can be configured to allow for comfortable use even in long gaming sessions. For example, the controller 550 can include textured grips and an optimized button layout. In some implementations, the controller 550 includes one or more of: integrated motion sensors, a high-resolution touchpad, and a built-in microphone array. The controller 550 includes an array of buttons, joysticks, and other controls that allow a user to interact with the computing device 500 to participate in interactive gameplay presented, for example, on a display device such as the display 516. The controller 550 can be powered by one or more regular or rechargeable batteries and supports both wireless and wired connectivity with the computing device 500, for example, via Bluetooth, WiFi, USB-C etc., or via a proprietary connection such as PlayStation Link^{™}. In some implementations, the controller 550 includes a light bar and player indicators for visual feedback and customization.

In some implementations, the input/output or accessory device includes a VR/AR headset 552. One example of such a headset is the PlayStation VR2 (PS VR2) headset that is configured to provide an immersive and interactive gaming experience. In some implementations, the headset 552 features dual organic light emitting device (OLED) displays with a combined resolution of 4000 x 2080 pixels-thus providing sharp visuals and a wide field of view. In some implementations, the VR/AR headset 552 includes advanced eye-tracking technology that enables foveated rendering, optimizing performance by focusing on where the user is looking. In some implementations, the headset 552 includes integrated cameras that facilitate tracking head movements without external sensors. In some implementations, the headset includes haptic feedback for tactile sensations and/or one or more acoustic transducers configured to provide a spatial sound effect the user. The headset 552 can include an adjustable headband and cushioned padding, and can be configured to connect to the computing device 500 either over a wireless network (e.g., over a WiFi^{®} or Bluetooth^{®} connection, or a proprietary connection such as PlayStation Link^{™}) or over a wire such as a USB-C cable.

In some implementations, the headset 552 can be configured to work in conjunction with one or more accessory controllers 554 such as the PlayStation VR2 Sense^{™} controllers. The accessory controllers 554 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 554 can be configured to provide a comfortable experience even during extended gameplay. In some implementations, the accessory controllers include one or more integrated sensors (accelerometer, gyroscope, etc.) and cameras to provide motion tracking. The accessory controllers 554 can be configured to connect to the computing device 500 and/or the headset 552 over a wireless connection such as WiFi^{®} or Bluetooth^{®}.

In some implementations, the computing device 500 can be connected to a handheld gaming device 556 such as the PlayStation Portal^{®}. The handheld gaming device 556 can be configured to stream games and media from the computing device 500 via a wireless connection such as WiFi^{®} or Bluetooth^{®}. The handheld gaming device 556 includes a high-resolution screen that allows users to play games and/or stream media remotely without using the display 516 connected to the computing device 500. This allows the display to be used for other purposes while the computing device 500 facilitates gameplay on the handheld gaming device 556. In some implementations, the handheld gaming device 556 is configured to act as a streaming receiver without running games natively on the device 556 itself. This makes the handheld gaming device 556 a convenient option for playing games run on the computing device 500, while leaving a TV connected to the computing device 500 free to be used for viewing other media. The handheld gaming device 556 can includes buttons and features similar to (or even same as) the controller 550, thus providing for a similar gaming experience as that with the controller 550.

In some implementations, the input/output or accessory devices can include a camera 558 and/or an earphone/headphone set 560 such as the PULSE Elite^{™} headset or the Pulse Explore^{™} earbuds. The camera 558 can be used to track user-movements, which in turn can be used as an input to an interactive game being executed on the computing device 500. The earphone/headphone set 560 can be used to provide audio feedback/output to a user from the computing device 500. In some implementations, the earphone/headphone set 560 can include a microphone configured to receive spoken inputs/instructions that in turn can be used to control an interactive game being executed on the computing device 500.

While this specification contains many specific implementation details, these should not be construed as limitations on the scope of what is being claimed, which is defined by the claims themselves, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially be claimed as such, one or more features from a claimed combination can in some cases be excised from the combination, and the claim may be directed to a sub-combination or variation of a sub-combination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method for denoising images generated using Monte Carlo rendering, the method being executable by one or more processors and comprising:
receiving image data of a first set of images, each image in the first set of images depicting a first scene;
for each pixel of a set of pixels of images in the first set of images, training a pixel-Gaussian Mixture Model (GMM) to provide a set of pixel-GMMs that collectively define a first image GMM, each pixel-GMM comprising a plurality of Gaussian distributions determined from the image data for a respective pixel;
training a diffusion model to denoise images, the training comprising:
generating a set of training images by sampling from the first image GMM, and
executing iterations of training using the set of training images; and
deploying the diffusion model for denoising of images generated using Monte Carlo rendering.

2. The method of claim 1, wherein generating a set of training images by sampling from the first image GMM comprises, for each pixel of a training image, sampling one or more data points from a pixel-GMM of a respective pixel and using the one or more data points to provide pixel data for the respective pixel within a training image.

3. The method of claim 2, further comprising averaging values of two or more data points to provide the pixel data.

4. The method of claim 1, wherein generating a set of training images by sampling from the first image GMM comprises sampling at a first samples per pixel (SPP) for a first training image and sampling at a second SPP for a second training image, the first SPP being less than the second SPP.

5. The method of claim 4, wherein the first training image is used as input to the diffusion model during training and the second SPP is used as a ground truth to determine a loss value.

6. The method of claim 1, wherein training a pixel-GMM comprises transforming image data from a color space to a radial log space.

7. The method of claim 1, wherein training a pixel-GMM comprises:
initializing the pixel-GMM using K-means clustering to define initial values of a set of parameters for each of the plurality of Gaussian distributions; and
adjusting values of the parameters from the initial values through iterations of Expectation-Maximization (EM) until convergence.

8. The method of claim 1, wherein deploying the diffusion model for denoising of images generated using Monte Carlo rendering comprises integrating the diffusion model in an application that is distributed to users.

9. The method of claim 1, wherein the values of the parameters in the set of parameters comprise a mean, a covariance matrix, and a weight that are specific to a respective Gaussian distribution of a respective pixel-GMM.

10. The method of claim 1, wherein images in the first set of images are generated using Monte Carlo rendering at a sample per pixel (SPP) that is greater than SPPs of training images in the set of training images.

11. A non-transitory computer-readable storage medium coupled to one or more processors and having instructions stored thereon which, when executed by the one or more processors, cause the one or more processors to perform operations for denoising images generated using Monte Carlo rendering, the operations comprising:
receiving image data of a first set of images, each image in the first set of images depicting a first scene;
for each pixel of a set of pixels of images in the first set of images, training a pixel-Gaussian Mixture Model (GMM) to provide a set of pixel-GMMs that collectively define a first image GMM, each pixel-GMM comprising a plurality of Gaussian distributions determined from the image data for a respective pixel;
training a diffusion model to denoise images, the training comprising:
generating a set of training images by sampling from the first image GMM, and
executing iterations of training using the set of training images; and
deploying the diffusion model for denoising of images generated using Monte Carlo rendering.

12. The non-transitory computer-readable storage medium of claim 11, wherein generating a set of training images by sampling from the first image GMM comprises, for each pixel of a training image, sampling one or more data points from a pixel-GMM of a respective pixel and using the one or more data points to provide pixel data for the respective pixel within a training image.

13. The non-transitory computer-readable storage medium of claim 12, wherein operations further comprising averaging values of two or more data points to provide the pixel data.

14. The non-transitory computer-readable storage medium of claim 11, wherein generating a set of training images by sampling from the first image GMM comprises sampling at a first samples per pixel (SPP) for a first training image and sampling at a second SPP for a second training image, the first SPP being less than the second SPP.

15. The non-transitory computer-readable storage medium of claim 14, wherein the first training image is used as input to the diffusion model during training and the second SPP is used as a ground truth to determine a loss value.

16. A system, comprising:
a computing device; and
a computer-readable storage device coupled to the computing device and having instructions stored thereon which, when executed by the computing device, cause the computing device to perform operations for denoising images generated using Monte Carlo rendering, the operations comprising:
receiving image data of a first set of images, each image in the first set of images depicting a first scene;
for each pixel of a set of pixels of images in the first set of images, training a pixel-Gaussian Mixture Model (GMM) to provide a set of pixel-GMMs that collectively define a first image GMM, each pixel-GMM comprising a plurality of Gaussian distributions determined from the image data for a respective pixel;
training a diffusion model to denoise images, the training comprising:
generating a set of training images by sampling from the first image GMM, and
executing iterations of training using the set of training images; and
deploying the diffusion model for denoising of images generated using Monte Carlo rendering.

17. The system of claim 16, wherein generating a set of training images by sampling from the first image GMM comprises, for each pixel of a training image, sampling one or more data points from a pixel-GMM of a respective pixel and using the one or more data points to provide pixel data for the respective pixel within a training image.

18. The system of claim 17, wherein operations further comprising averaging values of two or more data points to provide the pixel data.

19. The system of claim 16, wherein generating a set of training images by sampling from the first image GMM comprises sampling at a first samples per pixel (SPP) for a first training image and sampling at a second SPP for a second training image, the first SPP being less than the second SPP.

20. The system of claim 19, wherein the first training image is used as input to the diffusion model during training and the second SPP is used as a ground truth to determine a loss value.
